# NEUE EUROPÄISCHE PATENTSCHRIFT

(11) **EP 3 630 869 B2**
(45) Veröffentlichungstag und Bekanntmachung des Hinweises auf die Entscheidung über den Einspruch: **02.10.2024**
(45) Hinweis auf die Patenterteilung: 10.03.2021
(21) Anmeldenummer: 18723888.6
(22) Anmeldetag: 22.05.2018
(51) Int. Cl.: C08G 63/60, C08G 63/16, C08G 63/685, D01F 6/92, C08G 63/181

(54) **ALIPHATISCH-AROMATISCHER POLYESTER MIT ERHÖHTEM WEISSGRAD-INDEX**
ALIPHATIC-AROMATIC POLYESTERS HAVING AN INCREASED WHITE LEVEL INDEX
POLYESTER ALIPHATIQUE AROMATIQUE COMPRENANT UN INDICE DE NIVEAU DE BLANC ÉLEVÉ

(30) Priorität: 31.05.2017 EP 17173697
(43) Veröffentlichungstag der Anmeldung: 08.04.2020
(73) Patentinhaber: BASF SE, 67056 Ludwigshafen (DE)
(72) Erfinder: SCHEUERMANN, Klaus, 67056 Ludwigshafen (DE); LOOS, Robert, 67056 Ludwigshafen (DE); GARBE, Andreas, 67056 Ludwigshafen (DE); MÜLLER, Kevin, 67056 Ludwigshafen (DE)
(74) Vertreter: Meissner Bolte Partnerschaft mbB
(86) Internationale Anmeldenummer: PCT/EP2018/063309
(87) Internationale Veröffentlichungsnummer: WO 2018/219708

(56) Entgegenhaltungen:
- WO-A1-2011/012598
- WO-A1-2012/031997
- WO-A1-98/12242

## Beschreibung

Die vorliegende Erfindung betrifft einen aliphatisch-aromatischen Polyester, der einen Weißgrad-Index nach ASTM E 313-73 von mindestens 25 aufweist, ein Verfahren zu dessen Herstellung sowie die Verwendung des aliphatisch-aromatischen Polyesters zur Herstellung von Polyesterfasern (PF). Weiterhin betrifft die vorliegende Erfindung die Polyesterfasern (PF), die den aliphatisch-aromatischen Polyester enthalten.

Polyester sind im Allgemeinen Polymere mit Ester-Funktionen -[-CO-O-]- in ihrer Hauptkette. Sie werden üblicherweise durch Ringöffnungspolymerisation von Lactonen oder durch Polykondensation von Hydroxycarbonsäuren bzw. von Diolen und Dicarbonsäure(-derivate)n hergestellt. Eine wichtige Bedeutung kommt vor allem den aromatischen Polyestern zu, die in Form von Polyesterfasern Anwendung in der Textilindustrie finden.

Polyesterfasern werden üblicherweise nach dem Schmelzspinnverfahren hergestellt. Durch Hitzeeinwirkung entsteht dabei eine Schmelze, die durch Spinndüsen extrudiert wird. Üblicherweise enthält das Polymergemisch, aus dem die Polyesterfasern hergestellt werden, Polyethylenterephthalat (PET) und/oder Polybutylenterephthalat (PBT). Polyethylenterephthalat (PET) und Polybutylenterephthalat (PBT) zeichnen sich durch einen hohen Weißgrad-Index nach CIE 15.3 (2004) im Bereich von 70 bis 85 aus, weshalb sich die daraus hergestellten Polyesterfasern sehr gut einfärben lassen.

Das Einfärben der Polyesterfasern erfolgt meist durch den Einsatz von Dispersionsfarbstoffen, die in Form von Pigmenten, meist in wässriger Formulierung in Dispersionsfarbstoffen enthalten sind, nach dem Auszieh- oder Thermosolverfahren bei Temperaturen, die üblicherweise höher als 130 °C liegen.

WO 98/12242 A1 offenbart ein Verfahren zur Herstellung biologisch abbaubarer Polyester, bei dem in einem ersten Schritt ein Polyester hergestellt wird, der als monomere Bausteine eine Mischung aus 20 bis 95 mol-% mindestens einer aliphatischen oder cycloaliphatischen Dicarbonsäure oder deren esterbildendem Derivat, 5 bis 80 mol-% mindestens einer aromatischen Dicarbonsäure oder deren esterbildendem Derivat und mindestens eine Dihydroxyverbindung oder mindestens ein Aminoalkohol oder deren Mischungen, enthält. In einem zweiten Schritt werden 95 bis 99,9 mol-% dieses Polyesters mit 0,01 bis 5 mol-% einer Mischung aus einem mindestens ein-, einem mindestens zwei-, einem mindestens drei- und einem mindestens vier- oder höherkernigen Isocycyanat umgesetzt.

WO 2012/031997 A1 offenbart ein Verfahren zur Herstellung von Polyesteralkoholen durch Kondensation von Polytetrahydrofuran mit aromatischen Dicarbonsäuren und/oder deren Anhydriden und/oder deren Estern in Gegenwart eines Umesterungskatalysators in einer mehrstufigen Fahrweise, wobei nach der Polykondensation zur Deaktivierung des Katalysators Phosphorsäure eingesetzt wird. WO 2011/012598 A1 betrifft ein Verfahren zur Herstellung von spinn- und färbbaren Polyesterfasern, die einen Terephthalat-Polyester sowie ein polyesterhaltiges Additiv enthalten und sich bereits bei Temperaturen von unter 130 °C licht- und waschecht einfärben lassen, wodurch eine Energie- und Kosteneinsparung erreicht werden kann. Bei dem polyesterhaltigen Additiv handelt es sich um einen aliphatisch-aromatischen Polyester, der durch Kondensation einer Dicarbonsäure-Komponente und einer DiolKomponente in Anwesenheit eines Titankatalysators erhalten wird. Die Dicarbonsäure-Komponente umfasst dabei sowohl ein(e) aliphatische(s) als auch ein aromatische(s) Dicarbonsäure(-derivat).

Es hat sich jedoch herausgestellt, dass beim Einsatz der am wirtschaftlich günstigsten aliphatischen Dicarbonsäure Adipinsäure sowie beim Einsatz der Derivate der Adipinsäure zusammen mit einem Titankatalysator der resultierende aliphatisch-aromatische Polyester und somit die damit hergestellten Polyesterfasern eine Gelb- bis Orangefärbung aufweisen. Vor allem für die Einfärbung der Polyesterfasern ist es jedoch enorm wichtig, dass die verwendeten Polyester und die daraus hergestellten Polyesterfasern einen hohen Weißgrad-Index aufweisen.

Es besteht daher ein Bedarf an einem aliphatisch-aromatischen Polyester, der als polyesterhaltiges Additiv bei der Herstellung von Polyesterfasern eingesetzt werden kann und das Einfärben der Polyesterfasern bei Temperaturen unter 130 °C ermöglicht und der gleichzeitig einen ausreichenden Weißgrad-Index aufweist, um eine optimale Einfärbung der daraus hergestellten Polyesterfasern zu gewährleisten. Darüber hinaus sollte er einfach und kostengünstig herstellbar sein.

Die der vorliegenden Erfindung zugrunde liegende objektive technische Aufgabe besteht somit in der Bereitstellung eines neuen aliphatisch-aromatischen Polyesters bzw. in der Bereitstellung eines Verfahrens zur Herstellung eines solchen.

Gelöst wird diese Aufgabe durch einen aliphatisch-aromatischen Polyester gemäß Anspruch 1 erhältlich durch Kondensation mindestens der Komponenten (A), (B), (C) sowie (D):
1. (A) 40 bis 70 mol-%, bezogen auf die Komponenten (A) und (B), Adipinsäure und/oder mindestens eines Adipinsäure-Derivats,
2. (B) 30 bis 60 mol-%, bezogen auf die Komponenten (A) und (B), mindestens einer aromatischen 1,ω-Dicarbonsäure und/oder mindestens eines 1,ω-Dicarbonsäure-Derivats,
3. (C) 98 bis 102 mol-%, bezogen auf die Komponenten (A) und (B), mindestens eines aliphatischen 1,ω-Diols, und
4. (D) 0,01 bis 5 Gew.-%, bezogen auf das Gesamtgewicht der Komponenten (A) bis (C), mindestens eines Kettenverlängerers,

dadurch gekennzeichnet, dass der aliphatisch-aromatische Polyester einen Weißgrad-Index nach ASTM E 313-73 von mindestens 25 aufweist, und die Kondensation die vier Stufen i) bis iv) umfasst:
   i) eine kontinuierliche Veresterung einer Mischung, die die Komponenten (A), (B) und (C) enthält, in Gegenwart eines Katalysators unter Erhalt eines Veresterungsproduktes,
   ii) eine Vorkondensation,
   iii) eine Nachkondensation und
   iv) eine Polyadditionsreaktion,
wobei zu dem in der zweiten Stufe erhaltenen Vorkondensationsprodukt nach Verfahrensschritt ii) und vor und/oder während Verfahrensschritt iii) 0,03 bis 0,04 Gew.-% einer Phosphorverbindung zugefügt wird, bezogen auf das Gesamtgewicht des Vorkondensationsproduktes,
wobei es sich bei der Phosphorverbindung um phosphonige Säure oder phosphorige Säure handelt.

Der aliphatisch-aromatischen Polyester wird bevorzugt hergestellt über ein Verfahren, bei dem
i) in einer ersten Stufe eine Mischung, die die Komponenten (A), (B) und (C) enthält, in Gegenwart eines Katalysators kontinuierlich verestert wird unter Erhalt eines Veresterungsproduktes,
ii) in einer zweiten Stufe kontinuierlich das in der ersten Stufe erhaltene Veresterungsprodukt bis zu einer Viskositätszahl nach DIN 53728 von 20 bis 70 cm³/g vorkondensiert wird unter Erhalt eines Vorkondensationsproduktes,
iii) in einer dritten Stufe kontinuierlich das in der zweiten Stufe erhaltene Vorkondensationsprodukt bis zu einer Viskositätszahl nach DIN 53728 von 60 bis 170 cm³/g nachkondensiert wird unter Erhalt eines Nachkondensationsproduktes, und
v) in einer vierten Stufe kontinuierlich das in der dritten Stufe erhaltene Nachkondensationsprodukt bis zu einer Viskositätszahl nach DIN 53728 von 100 bis 300 cm³/g in einer Polyadditionsreaktion mit dem mindestens einem Kettenverlängerer (D) umgesetzt wird unter Erhalt des aliphatisch-aromatischen Polyesters,
wobei zu dem in der zweiten Stufe erhaltenen Vorkondensationsprodukt nach Verfahrensschritt ii) und vor und/oder während Verfahrensschritt iii) 0,03 bis 0,04 Gew.% einer Phosphorverbindung zugefügt wird, bezogen auf das Gesamtgewicht des Vorkondensationsproduktes, wobei es sich bei der Phosphorverbindung um phosphonige Säure oder phosphorige Säure handelt.

Es wurde überraschend festgestellt, dass durch die Zugabe von 0,03 bis 0,04 Gew.-% einer Phosphorverbindung gemäß Anspruch 1 während des Herstellungsverfahrens des erfindungsgemäßen aliphatisch-aromatischen Polyesters dieser einen erhöhten Weißgrad-Index von mindestens 25 nach ASTM E 313-73 aufweist, wodurch eine licht und waschechte Einfärbung der daraus hergestellten Polyesterfasern gewährleistet ist. Die daraus hergestellten Polyesterfasern weisen weiterhin ein in der Anwendung breit wählbares Farbspektrum, gute Reibechtheiten und sehr gute Waschechtheiten auf.

Darüber hinaus wurde überraschend festgestellt, dass der erfindungsgemäße aliphatisch-aromatische Polyester trotz erhöhter Säurezahl aufgrund der beim Herstellungsverfahren zugesetzten Menge einer Phosphorverbindung gemäß Anspruch 1 eine hohe Viskositätszahl aufweist. Die Kettenverlängerung mit Isocyanaten führt damit nicht zu unerwünschten Stippen, sondern zu dem Aufbau eines hohen Molekulargewichts. Bei einem nachfolgenden Schmelzspinnverfahren reißen die Polyesterfasern deshalb nicht, sondern weisen eine hohe Reißfestigkeit und Stabilität auf.

Stippen entstehen normalerweise, wenn die Säurezahl des Nachkondensationsproduktes (des aliphatischaromatischen Polyester vor der Kettenverlängerung) zu hoch ist. Durch die hohe Säurezahl wird die Schmelze inhomogen, d.h. ein Teil der zur Kettenverlängerung eingesetzten Isocyanate wird nicht in die Polymerkette eingebaut, sondern liegt als feste, gelartige Körner vor (sogenannte Stippen). Aufgrund der Stippen würden bei einem anschließenden Schmelzspinnverfahren die Fasern reißen.

Nachfolgend wird der aliphatisch-aromatische Polyester sowie das Verfahren zu seiner Hertellung näher erläutert.

### Aliphatisch-aromatischer Polyester

Der erfindungsgemäße aliphatisch-aromatische Polyester ist erhältlich durch Kondensation mindestens der Komponenten (A), (B), (C) sowie (D).

Unter "Kondensation" wird im Rahmen der vorliegenden Erfindung ein Verfahren verstanden, das die vier Stufen i) bis iv) umfasst: Eine kontinuierliche Veresterung (Stufe i)), eine Vorkondensation (Stufe ii)), eine Nachkondensation (Stufe iii)) sowie eine Polyadditionsreaktion (Stufe iv)).

Die Kondensation wird weiter unten in der Beschreibung im Zusammenhang mit dem Verfahren zur Herstellung des aliphatisch-aromatischen Polyesters näher erläutert.

### Komponente (A)

Bei der Komponente (A) handelt es sich um Adipinsäure und/oder mindestens ein Adipinsäure-Derivat.

Die Begriffe *Adipinsäure und*/*oder mindestens ein Adipinsäure-Derivat* sowie *Komponente (A)* werden im Rahmen der vorliegenden Erfindung synonym gebraucht und haben den gleichen Bedeutungsinhalt. Darüber hinaus wird im Rahmen der vorliegenden Erfindung unter dem Begriff mindestens ein Adipinsäure-Derivat genau ein Adipinsäure-Derivat sowie Mischungen aus zwei und mehr Adipinsäure-Derivaten verstanden. In einer bevorzugten Ausführungsform wird bei der Kondensation genau ein Adipinsäure-Derivat eingesetzt.

In einer weiteren bevorzugten Ausführungsform wird bei der Kondensation eine Mischung aus Adipinsäure und mindestens einem Adipinsäure-Derivat eingesetzt.

In einer besonders bevorzugten Ausführungsform wird bei der Kondensation nur Adipinsäure eingesetzt.

Komponente (A) wird in Mengen von mindestens 40 mol-%, bevorzugt von mindestens 45 mol-%, mehr bevorzugt von mindestens 50 mol-%, bezogen auf die Komponenten (A) und (B), eingesetzt.

Des Weiteren wird die Komponente (A) in Mengen von höchstens 70 mol-%, bevorzugt von höchstens 65 mol-%, mehr bevorzugt von höchstens 63 mol-%, bezogen auf die Komponenten (A) und (B), eingesetzt.

Die Komponente (A) wird in Mengen von 40 bis 70 mol-%, vorzugsweise von 45 bis 65 mol-%, mehr bevorzugt von 50 bis 63 mol-%, bezogen auf die Komponenten (A) und (B), eingesetzt.

Adipinsäure-Derivate sind dem Fachmann prinzipiell bekannt.

Im Rahmen der vorliegenden Erfindung ist das Adipinsäure-Derivat vorzugsweise ein Adipinsäure-Ester. Dabei kann der Adipinsäure-Ester einzeln sowie als Mischung aus zwei und mehreren Estern der Adipinsäure eingesetzt werden.

Als Adipinsäure-Ester kommen dabei beispielsweise die Di-C₁-C₆-Alkylester der Adipinsäure, zum Beispiel die Dimethyl-, Diethyl-, Di-n-Propyl-, Di-iso-Propyl-, Di-n-Butyl-, Di-iso-Butyl-, Di-t-Butyl-, Di-n-Pentyl-, Di-iso-Pentyl- oder Di-n-Hexylester der Adipinsäure, in Betracht.

### Komponente (B)

Bei der Komponente (B) handelt es sich um mindestens eine aromatische 1,ω-Dicarbonsäure und/oder mindestens ein aromatisches 1,ω-Dicarbonsäure-Derivat.

Die Begriffe *mindestens eine aromatische 1,ω-Dicarbonsäure und*/*oder mindestens ein aromatisches 1,ω-Dicarbonsäure-Derivat* sowie *Komponente (B)* werden im Rahmen der vorliegenden Erfindung synonym gebraucht und haben den gleichen Bedeutungsinhalt.

Darüber hinaus wird im Rahmen der vorliegenden Erfindung unter dem Begriff mindestens eine aromatische 1,ω-Dicarbonsäure genau eine aromatische 1,ω-Dicarbonsäure sowie Mischungen aus zwei und mehreren aromatischen 1,ω-Dicarbonsäuren verstanden.

Ebenso wird im Rahmen der vorliegenden Erfindung unter dem Begriff mindestens ein aromatisches 1,ω-Dicarbonsäure-Derivat genau ein aromatisches 1,ω-Dicarbonsäure-Derivat sowie Mischungen aus zwei und mehreren aromatischen 1,ω-DicarbonsäureDerivaten verstanden. In einer bevorzugten Ausführungsform wird bei der Kondensation genau ein aromatisches 1,ω-Dicarbonsäure-Derivat eingesetzt.

In einer weiteren bevorzugten Ausführungsform wird bei der Kondensation eine Mischung aus einer aromatischen 1,ω-Dicarbonsäure und einem aromatischen 1,ω-Dicarbonsäure-Derivat eingesetzt.

In einer besonders bevorzugten Ausführungsform wird bei der Kondensation genau eine aromatische 1,ω-Dicarbonsäure eingesetzt.

Komponente (B) wird in Mengen von mindestens 30 mol-%, vorzugsweise von mindestens 35 mol-%, mehr bevorzugt von mindestens 37 mol-%, bezogen auf die Komponenten (A) und (B), eingesetzt.

Des Weiteren wird die Komponente (B) in Mengen von höchstens 60 mol-%, vorzugsweise von höchstens 55 mol-%, mehr bevorzugt von höchstens 50 mol-%, bezogen auf die Komponenten (A) und (B), eingesetzt.

Die Komponente (B) wird in Mengen von 30 bis 60 mol-%, vorzugsweise von 35 bis 55 mol-%, mehr bevorzugt von 37 bis 50 mol-%, bezogen auf die Komponenten (A) und (B), eingesetzt.

Aromatische 1,ω-Dicarbonsäuren sowie aromatische 1,ω-Dicarbonsäure-Derivate sind dem Fachmann prinzipiell bekannt.

Geeignete aromatische 1,ω-Dicarbonsäuren sind Terephthalsäure, Isophthalsäure, 2,6-Naphthoesäure, Furandicarbonsäure oder 1,5-Naphthoesäure.

Im Rahmen der vorliegenden Erfindung ist die aromatische 1,ω-Dicarbonsäure vorzugsweise eine aromatische 1,ω-Dicarbonsäure mit 8 bis 12, bevorzugt eine solche mit 8 Kohlenstoffatomen. Die aromatische 1,ω-Dicarbonsäure kann dabei linear oder verzweigt sein.

Im Rahmen der vorliegenden Erfindung sind als 1,ω-Dicarbonsäure-Derivate die Ester der aromatischen 1,ω-Dicarbonsäuren bevorzugt. Dabei können die Ester der aromatischen 1,ω-Dicarbonsäuren einzeln sowie als Mischung aus zwei und mehreren Estern der aromatischen 1,ω-Dicarbonsäuren eingesetzt werden.

Als Ester der aromatischen 1,ω-Dicarbonsäuren kommen dabei die Di-C₁-C₆-Alkylester der aromatischen 1,ω-Dicarbonsäuren, zum Beispiel die Dimethyl-, Diethyl-, Di-n-Propyl-, Di-iso-Propyl-, Di-n-Butyl-, Di-iso-Butyl-, Di-t-Butyl-, Di-n-Pentyl-, Di-iso-Pentyloder Di-n-Hexylester der aromatischen 1,ω-Dicarbonsäuren, in Betracht.

In einer bevorzugten Ausführungsform der vorliegenden Erfindung ist die Komponente (B) Terephthalsäure und/oder ein Terephthalsäure-Derivat.

Gegenstand der vorliegenden Erfindung ist somit auch ein aliphatisch-aromatischer Polyester, bei dem die Komponente (B) Terephthalsäure und/oder ein Terephthalsäure-Derivat ist.

In einer besonders bevorzugten Ausführungsform der vorliegenden Erfindung ist die Komponente (B) Terephthalsäure.

### Komponente (C)

Bei der Komponente (C) handelt es sich um mindestens ein aliphatisches 1,ω-Diol.

Die Begriffe *mindestens ein aliphatisches 1,ω-Diol* sowie *Komponente* (C) werden im Rahmen der vorliegenden Erfindung synonym gebraucht und haben den gleichen Bedeutungsinhalt. Darüber hinaus wird im Rahmen der vorliegenden Erfindung unter dem Begriff mindestens ein aliphatisches 1,ω-Diol genau ein aliphatisches 1,ω-Diol sowie Mischungen aus zwei und mehreren aliphatischen 1,ω-Diolen verstanden. In einer bevorzugten Ausführungsform wird im erfindungsgemäßen Verfahren genau ein aliphatisches 1,ω-Diol eingesetzt.

Der aliphatisch-aromatische Polyester enthält mindestens 98 mol-%, bevorzugt mindestens 99 mol-%, bezogen auf die Komponenten (A) und (B), Komponente (C) in kondensierter Form.

Darüber hinaus enthält der aliphatisch-aromatische Polyester höchstens 102 mol-%, bevorzugt höchstens 101 mol-%, bezogen auf die Komponenten (A) und (B), Komponente (C) in kondensierter Form.

Der aliphatisch-aromatische Polyester enthält von 98 bis 102 mol-%, bevorzugt von 99 bis 101 mol-%, bezogen auf die Komponenten (A) und (B), Komponente (C) in kondensierter Form.

Während der Kondensation, also während der Herstellung des aliphatisch-aromatischen Polyesters, wird die Komponente (C) jedoch vorzugsweise im Überschuss eingesetzt, d.h. sie wird vorzugsweise in Mengen von größer 100 mol-%, mehr bevorzugt in Mengen von größer 120 mol-%, bezogen auf die Komponenten (A) und (B), eingesetzt.

Aliphatische 1,ω-Diole sind dem Fachmann prinzipiell bekannt.

Geeignete aliphatische 1,ω-Diole sind Ethylenglycol, 1,3-Propandiol, 1,4-Butandiol, 1,5-Pentandiol, 1,6-Hexandiol, 2,2-Dimethyl-1,3-Propandiol, 2-Ethyl-2-Butyl-1,3-Propandiol, 2-Ethyl-2-Isobutyl-1,3-Propandiol oder 2,2,4-Trimethyl-1,6-Hexandiol.

Im Rahmen der vorliegenden Erfindung ist das aliphatische 1,ω-Diol vorzugsweise ein aliphatisches 1,ω-Diol mit 2 bis 12, bevorzugt mit 4 bis 6 Kohlenstoffatomen. Das aliphatische 1,ω-Diol kann dabei linear oder verzweigt sein.

Besonders bevorzugte aliphatische 1,ω-Diole sind 1,3-Propandiol, 1,4-Butandiol, 1,5-Pentandiol und 1,6-Hexandiol.

In einer besonders bevorzugten Ausführungsform ist die Komponente (C) 1,3-Propandiol und/oder 1,4-Butandiol.

Gegenstand der vorliegenden Erfindung ist somit auch ein aliphatisch-aromatischer Polyester, bei dem die Komponente (C) 1,3-Propandiol und/oder 1,4-Butandiol ist.

### Komponente (D)

Bei der Komponente (D) handelt es sich um mindestens einen Kettenverlängerer.

Die Komponente (D) wird in Mengen im Bereich von 0,01 bis 5 Gew.-%, bevorzugt in Mengen von 0,05 bis 3 Gew.-%, mehr bevorzugt in Mengen von 0,1 bis 2 Gew.-%, bezogen auf das Gesamtgewicht der Komponenten (A) bis (C), eingesetzt.

Der mindestens eine Kettenverlängerer ist vorzugsweise ausgewählt aus der Gruppe bestehend aus Verbindungen, die mindestens drei zur Esterbildung befähigte Gruppen enthalten (D1), und aus Verbindungen, die mindestens zwei Isocyanatgruppen enthalten (D2).

Die Verbindungen (D1) enthalten vorzugsweise 3 bis 10 funktionelle Gruppen, welche zur Ausbildung von Esterbindungen fähig sind. Besonders bevorzugte Verbindungen (D1) haben 3 bis 6 funktionelle Gruppen, die zur Ausbildung von Esterbindungen fähig sind, im Molekül, insbesondere 3 bis 6 Hydroxylgruppen und/oder Carboxylgruppen.

Beispiele für die Verbindungen (D1) sind Weinsäure, Zitronensäure, Apfelsäure, Trimethylolpropan, Trimethylolethan, Pentaerythrit, Polyethertriole, Glycerin, Trimesinsäure, Trimellitsäure, Trimellitanhydrid, Pyromellitsäure, Pyromellitdianhydrid oder Hydroxyisophthalsäure.

Die Verbindungen (D2) enthalten vorzugsweise ein Diisocyanat oder eine Mischung unterschiedlicher Diisocyanate. Es können aromatische oder aliphatische Diisocyanate eingesetzt werden. Es können aber auch höherfunktionelle Isocyanate verwendet werden.

Geeignete "aromatische Diisocyanate" sind ausgewählt aus der Gruppe bestehend aus Toluylen-2,4-Diisocyanat, Toluylen-2,6-Diisocyanat, 2,2'-Diphenylmethandiisocyanat, 2,4'-Diphenylmethandiisocyanat, 4,4'-Diphenylmethandiisocyanat, Naphthylen-1,5-Diisocyanat und Xylylen-Diisocyanat.

Im Rahmen der vorliegenden Erfindung sind als aromatische Diisocyanate 2,2'-Diphenylmethandiisocyanat, 2,4'-Diphenylmethandiisocyanat sowie 4,4'-Diphenylmethandiisocyanat bevorzugt, besonders bevorzugt werden diese Diphenylmethandiisocyanate als Mischungen eingesetzt.

Vorzugsweise enthalten die Verbindungen (D2) bis zu 5 Gew.-%, bezogen auf das Gesamtgewicht der Verbindung (D2), Urethiongruppen. Diese dienen beispielsweise zum Verkappen der Isocyanatgruppen.

Die Verbindungen (D2) können auch ein dreikerniges aromatisches Diisocyanat enthalten. Ein Beispiel für ein dreikerniges aromatisches Isocyanat ist Tri(4-isocyanophenyl)methan. Die mehrkernigen aromatischen Diisocyanate fallen beispielsweise bei der Herstellung von 1- oder 2-kernigen aromatischen Diisocyanaten an.

Unter einem "aliphatischen Diisocyanat" werden im Rahmen der vorliegenden Erfindung vor allem lineare oder verzweigte Alkylendiisocyante oder Cycloalkylendiisocyante mit 2 bis 20 Kohlenstoffatomen, bevorzugt mit 3 bis 12 Kohlenstoffatomen, zum Beispiel 1,6-Hexamethylendiisocyanat, 1,5-Pentamethylendiisocyanat, Isophorondiisocyanat oder Methylen-bis(4-isocyanatocyclohexan), verstanden. Besonders bevorzugte aliphatische Diisocyanate sind 1,6-Hexamethylendiisocyanat und Isophorondiisocyanat.

Es können aber auch aliphatische Diisocyanate eingesetzt werden, die auf N-Hexamethylendiisocyanat basieren, beispielsweise zyklische Trimere, Pentamere oder höhere Oligomere des N-Hexamethylendiisocyanats.

Im Rahmen der vorliegenden Erfindung ist die Komponente (D) vorzugsweise Hexamethylendiisocyanat.

Gegenstand der vorliegenden Erfindung ist somit auch ein aliphatisch-aromatischer Polyester, bei dem die Komponente (D) Hexamethylendiisocyanat ist.

Der erfindungsgemäße aliphatisch-aromatische Polyester weist einen Weißgrad-Index nach ASTM E 313-73 von mindestens 25 auf.

Vorzugsweise weist der aliphatisch-aromatische Polyester einen Weißgrad-Index nach ASTM E 313-73 im Bereich von 25 bis 40 auf, bevorzugt im Bereich von 28 bis 35, mehr bevorzugt im Bereich von 30 bis 35.

Unter dem "Weißgrad-Index" wird im Rahmen der vorliegenden Erfindung das Zahlenmaß für die Remissionsfähigkeit des aliphatisch-aromatischen Polyesters bzw. der Polyesterfasern (PF) verstanden. Er dient als Qualitätsmerkmal und wird durch kolorimetrische, fotometrische oder spektralfotometrische Messmethoden bestimmt. Ein niedriger Weißgrad-Index bedeutet, dass der aliphatisch-aromatische Polyester bzw. die Polyesterfasern (PF) eine Gelbfärbung aufweisen. Ein hoher Weißgrad-Index bedeutet, dass der aliphatisch-aromatische Polyester bzw. die Polyesterfasern (PF) eine geringe bis keine Gelbfärbung aufweisen und dadurch weißer erscheinen. Der Weißgrad-Index des aliphatisch-aromatischen Polyesters wird im Rahmen der vorliegenden Erfindung nach ASTM E 313-73 bestimmt, der Weißgrad-Index der Polyesterfasern (PF) nach CIE 15.3 (2004).

Gegenstand der vorliegenden Erfindung ist damit auch ein aliphatisch-aromatischer Polyester, bei dem der aliphatisch-aromatische Polyester einen Weißgrad-Index nach ASTM E 313-73 von 25 bis 40 aufweist.

Der aliphatisch-aromatische Polyester weist üblicherweise eine Säurezahl gemessen nach DIN EN ISO 2114:2002-06 im Bereich von 1,1 bis 1,4 mg KOH/g auf. Als Lösemittelgemisch für 1 g Polymer werden 15 mL 1,2-Dichlorbenzol verwendet, in denen der Polyester bei 180 °C gelöst und dann mit 20 mL Pyridin verdünnt wird. Nach Abkühlen auf 60 °C und Zugabe von 50 mL Tetrahydrofuran (THF), 5 mL Wasser und 40 mL Ethanol wird mit 0,1 M ethanolischer Kaliumhydroxid-Lösung potentiographisch mit Wendepunktsindikator titriert.

Gegenstand der vorliegenden Erfindung ist damit auch ein aliphatisch-aromatischer Polyester, bei dem der aliphatisch-aromatische Polyester eine Säurezahl gemessen nach DIN EN ISO 2114:2002-06 im Bereich von 1,1 bis 1,4 mg KOH/g aufweist.

Der aliphatisch-aromatische Polyester weist üblicherweise eine Viskositätszahl im Bereich von 100 bis 300 cm³/g auf, bevorzugt im Bereich von 120 bis 220 cm³/g, mehr bevorzugt im Bereich von 150 bis 210 cm³/g. Die Bestimmung der Viskositätszahl erfolgt in einer Lösung von 0,5 g des aliphatisch-aromatischen Polyesters in 100 ml einer 1:1 Mischung von Phenol und o-Dichlorbenzol.

Gegenstand der vorliegenden Erfindung ist damit auch ein aliphatisch-aromatischer Polyester, bei dem der aliphatisch-aromatische Polyester eine Viskositätszahl nach DIN 53728 im Bereich von 100 bis 300 cm³/g aufweist.

Der aliphatisch-aromatische Polyester weist üblicherweise eine Glasübergangstemperatur T_{G} auf. Die Glasübergangstemperatur T_{G} des aliphatisch-aromatischen Polyesters liegt üblicherweise im Bereich von -50 bis 0 °C, bevorzugt im Bereich von -45 bis -10 °C und insbesondere bevorzugt im Bereich von -40 bis -20 °C, bestimmt durch Dynamische Differenzkalorimetrie (Differential Scanning Calorimetry; DSC) bei einer Aufheiz- und Abkühlrate von 10 °C/min.

Gegenstand der vorliegenden Erfindung ist somit auch ein aliphatisch-aromatischer Polyester, bei dem die Glasübergangstemperatur (T_{G}) des aliphatisch-aromatischen Polyesters im Bereich von -50 bis 0 °C liegt.

Üblicherweise weist der aliphatisch-aromatische Polyester eine Schmelze-Volumenfließrate (MVR) gemessen nach ISO 1133 im Bereich von 0,5 bis 40 cm³/10 min auf, bevorzugt im Bereich von 1 bis 20 cm³/10 min, mehr bevorzugt im Bereich von 1,5 bis 10 cm³/10 min. Die Prüftemperatur beträgt dabei 190 °C und die Prüflast 2,19 kg. Die Aufschmelzzeit beträgt 4 Minuten.

Die aliphatisch-aromatischen Polyester sind üblicherweise statistische Copolymere, das heißt der Einbau der Komponenten (A) und (B) erfolgt rein zufällig. Die Verteilung der Länge der einzelnen Blöcke lässt sich nach B. Vollmert, Grundriss der makromolekularen Chemie berechnen.

Das gewichtsmittlere Molekulargewicht (M_{W}) des aliphatisch-aromatischen Polyesters liegt üblicherweise im Bereich von 50.000 bis 300.000 g/mol, bevorzugt im Bereich von 50.000 bis 150.000 g/mol, bestimmt mittels Gelpermeationschromatographie (GPC) (Size Exclusion Chromatography (SEC)) nach ASTM D4001. Als Lösemittel wird 1,1,1,3,3,3-Hexafluor-2-propanol gegen eng verteilte Polymethylmethacrylat(PMMA)-Standards verwendet.

Das zahlenmittlere Molekulargewicht (Mₙ) des aliphatisch-aromatischen Polyesters liegt üblicherweise im Bereich von 5.000 bis 60.000 g/mol, bevorzugt im Bereich von 15.000 bis 40.000 g/mol und insbesondere bevorzugt im Bereich von 20.000 bis 40.000 g/mol, bestimmt mittels Gelpermeationschromatographie (GPC) (Size Exclusion Chromatography (SEC)) nach ASTM D4001. Als Lösemittel wird 1,1,1,3,3,3-Hexafluor-2-propanol gegen eng verteilte Polymethylmethacrylat(PMMA)-Standards verwendet.

Das M_{W}/Mₙ-Verhältnis liegt üblicherweise im Bereich von 1 bis 6, bevorzugt im Bereich von 3 bis 6.

Der aliphatisch-aromatische Polyester weist im Allgemeinen eine Schmelztemperatur (T_{M}) auf, die im Bereich von 90 bis 150 °C, bevorzugt im Bereich von 100 bis 140 °C liegt, bestimmt durch Dynamische Differenzkalorimetrie (Differential Scanning Calorimetry; DSC) bei einer Aufheiz- und Abkühlrate von 10 °C/min.

Bevorzugt enthält der aliphatisch-aromatische Polyester mindestens die Komponenten (A), (B), (C) sowie (D):
(A) 40 bis 70 mol-%, bezogen auf die Komponenten (A) und (B), Adipinsäure und/oder mindestens eines Adipinsäure-Derivats,
(B) 30 bis 60 mol-%, bezogen auf die Komponenten (A) und (B), mindestens einer aromatischen 1,ω-Dicarbonsäure und/oder mindestens eines 1,ω-Dicarbonsäure-Derivats,
(C) 98 bis 102 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers,
in kondensierter Form.

Vorzugsweise ist der aliphatisch-aromatische Polyester erhältlich durch Kondensation mindestens der Komponenten (A), (B), (C) sowie (D):
(A) 45 bis 65 mol-%, bezogen auf die Komponenten (A) und (B), Adipinsäure und/oder mindestens eines Adipinsäure-Derivats,
(B) 35 bis 55 mol-%, bezogen auf die Komponenten (A) und (B), mindestens einer aromatischen 1,ω-Dicarbonsäure und/oder mindestens eines 1,ω-Dicarbonsäure-Derivats,
(C) 99 bis 101 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers.

Gegenstand der vorliegenden Erfindung ist somit auch ein aliphatisch-aromatischer Polyester, bei dem der aliphatisch-aromatische Polyester erhältlich ist durch Kondensation mindestens der Komponenten (A), (B), (C) sowie gegebenenfalls (D):
(A) 45 bis 65 mol-%, bezogen auf die Komponenten (A) und (B), Adipinsäure und/oder mindestens eines Adipinsäure-Derivats,
(B) 35 bis 55 mol-%, bezogen auf die Komponenten (A) und (B), mindestens einer aromatischen 1,ω-Dicarbonsäure und/oder mindestens eines 1,ω-Dicarbonsäure-Derivats,
(C) 99 bis 101 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers.

Ein weiterer Gegenstand der vorliegenden Erfindung ist damit auch ein aliphatisch-aromatische Polyester enthaltend mindestens die Komponenten (A), (B), (C) sowie gegebenenfalls (D):
(A) 45 bis 65 mol-%, bezogen auf die Komponenten (A) und (B), Adipinsäure und/oder mindestens eines Adipinsäure-Derivats,
(B) 35 bis 55 mol-%, bezogen auf die Komponenten (A) und (B), mindestens einer aromatischen 1,ω-Dicarbonsäure und/oder mindestens eines 1,ω-Dicarbonsäure-Derivats,
(C) 99 bis 101 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers,
in kondensierter Form.

Der aliphatisch-aromatische Polyester wird bevorzugt hergestellt über ein Verfahren, bei dem
i) in einer ersten Stufe eine Mischung, die die Komponenten (A), (B) und (C) enthält, in Gegenwart eines Katalysators kontinuierlich verestert wird unter Erhalt eines Veresterungsproduktes,
ii) in einer zweiten Stufe kontinuierlich das in der ersten Stufe erhaltene Veresterungsprodukt bis zu einer Viskositätszahl nach DIN 53728 von 20 bis 70 cm³/g vorkondensiert wird unter Erhalt eines Vorkondensationsproduktes,
iii) in einer dritten Stufe kontinuierlich das in der zweiten Stufe erhaltene Vorkondensationsprodukt bis zu einer Viskositätszahl nach DIN 53728 von 60 bis 170 cm³/g nachkondensiert wird unter Erhalt eines Nachkondensationsproduktes, und
iv) in einer vierten Stufe kontinuierlich das in der dritten Stufe erhaltene Nachkondensationsprodukt bis zu einer Viskositätszahl nach DIN 53728 von 100 bis 300 cm³/g in einer Polyadditionsreaktion mit dem mindestens einem Kettenverlängerer (D) umgesetzt wird unter Erhalt des aliphatisch-aromatischen Polyesters,
wobei zu dem in der zweiten Stufe erhaltenen Vorkondensationsprodukt nach Verfahrensschritt ii) und vor und/oder während Verfahrensschritt iii) 0,03 bis 0,04 Gew.% einer Phosphorverbindung zugefügt wird, bezogen auf das Gesamtgewicht des Vorkondensationsproduktes, wobei es sich bei der Phosphorverbindung um phosphonige Säure oder phosphorige Säure handelt.

Gegenstand der vorliegenden Erfindung ist damit auch der aliphatisch-aromatische Polyester, der nach dem oben stehenden Verfahren erhältlich ist.

### Verfahren zur Herstellung des aliphatisch-aromatischen Polyesters

Für das erfindungsgemäße Verfahren zur Herstellung des aliphatisch-aromatischen Polyesters gelten die vorstehend genannten Ausführungen und Bevorzugungen des aliphatisch-aromatischen Polyesters entsprechend.

### Stufe i)

In einer ersten Stufe (Stufe i)) wird eine Mischung, die die Komponenten (A), (B) und (C) enthält, in Gegenwart eines Katalysators kontinuierlich verestert unter Erhalt eines Veresterungsproduktes.

Die Komponenten (A), (B) und (C) werden dabei vorzugsweise in einer Vorstufe vor Stufe i) unter Erhalt einer Mischung gemischt. Das Mischen der Komponenten (A), (B) und (C) kann in allen dem Fachmann bekannten Mischungsvorrichtungen durchgeführt werden.

Handelt es sich bei Komponente (A) um Adipinsäure und bei Komponente (B) um mindestens eine aromatische 1,ω-Dicarbonsäure, werden die Komponenten (A), (B) und (C) vorzugsweise bei einer Temperatur von 20 bis 70 °C unter Erhalt einer Mischung vermischt.

Handelt es sich bei Komponente (A) um einen Adipinsäureester und/oder bei Komponente (B) um mindestens einen 1,ω-Dicarbonsäureester, werden die Komponenten (A), (B) und (C) vorzugsweise bei einer Temperatur von 140 bis 200 °C unter Erhalt einer Mischung vermischt.

Alternativ kann Komponente (A) oder Komponente (B) mit Komponente (C) zu einem Polyester verestert werden und dieser dann mit der jeweils anderen Komponente (B) oder (A) unter Erhalt einer Mischung vermischt werden.

Unter "Veresterung" wird im Rahmen der vorliegenden Erfindung sowohl eine "reine Veresterung" als auch eine "Umesterung" verstanden.

Unter einer "reinen Veresterung" wird im Rahmen der vorliegenden Erfindung die Umsetzung mindestens eines Diols mit mindestens einer Dicarbonsäure verstanden unter Bildung eines (Poly)esters und Wasser.

Unter einer "Umesterung" wird im Rahmen der vorliegenden Erfindung eine Reaktion verstanden, bei der ein Ester in einen anderen überführt wird. Die Umesterung kann entweder durch Reaktion einer Estergruppe mit einer Hydroxylgruppe und/oder durch Reaktion zweier Estergruppen erfolgen.

Die "Umesterung" kann nach der reinen Veresterung erfolgen und/oder parallel zu der reinen Veresterung.

Die Mischung, die die Komponenten (A), (B) und (C) enthält, wird in Gegenwart eines Katalysators kontinuierlich verestert.

Als Katalysatoren werden üblicherweise Zink-, Aluminium- und insbesondere Titanverbindungen eingesetzt. Katalysatoren aus Titanverbindungen, wie Tetrabutylorthotitanat oder Tetra(iso-propyl)orthotitanat haben gegenüber den in der Literatur häufig verwendeten Zinn-, Antimon-, Cobalt- und Bleiverbindungen, wie Zinndioctanat, den Vorteil, dass im Produkt verbleibende Restmengen des Katalysators oder Folgeprodukte des Katalysators weniger toxisch sind.

Der Katalysator wird vorzugsweise in Mengen von mindestens 0,001 Gew.-%, mehr bevorzugt in Mengen von mindestens 0,03 Gew.-%, bezogen auf die Komponenten (A), (B) und (C), eingesetzt.

Des Weiteren wird der Katalysator vorzugsweise in Mengen von höchstens 1 Gew.-%, mehr bevorzugt von höchstens 0,2 Gew.-%, bezogen auf die Komponenten (A), (B) und (C), eingesetzt.

In Stufe i) kann entweder die Gesamtmenge oder eine Teilmenge des Katalysators eingesetzt werden. Vorzugsweise wird eine Teilmenge des Katalysators eingesetzt. Die restliche Teilmenge an Katalysator wird dann vorzugsweise in Stufe ii) eingesetzt.

In einer bevorzugten Ausführungsform werden die Stufen i) und ii) in Gegenwart eines Titankatalysators durchgeführt.

Gegenstand der vorliegenden Erfindung ist somit auch ein Verfahren, bei dem die Stufen i) und ii) in Gegenwart eines Titankatalysators durchgeführt werden.

Stufe i) wird vorzugsweise bei einer Temperatur im Bereich von 180 bis 260 °C, bevorzugt bei einer Temperatur im Bereich von 220 bis 250 °C sowie vorzugsweise bei einem Druck im Bereich von 0,6 bis 1,2 bar, bevorzugt im Bereich von 0,8 bis 1,1 bar durchgeführt.

Stufe i) sowie Stufe ii) werden vorzugsweise in einem einzigen Reaktor, wie beispielsweise einem Turmreaktor, durchgeführt (siehe WO 03/042278 und DE-A 199 29 790).

In Stufe i) wird die Mischung unter Erhalt eines Veresterungsproduktes kontinuierlich verestert. Dabei wird Komponente (C) vorzugsweise im Überschuss zugesetzt, die überschüssige Komponente (C) nach Erhalt des Veresterungsprodukts vorzugsweise abdestilliert und nach beispielsweise destillativer Aufreinigung wieder dem Kreislauf zugeführt.

### Stufe ii)

In Stufe ii) wird das in der ersten Stufe (Stufe i)) erhaltene Veresterungsprodukt bis zu einer Viskositätszahl nach DIN 53728 von 20 bis 70 cm³/g vorkondensiert unter Erhalt eines Vorkondensationsproduktes.

Unter "Vorkondensation" wird im Rahmen der vorliegenden Erfindung eine Kondensationsreaktion verstanden, die der Nachkondensation (Stufe iii)) vorgeschaltet ist und bei der sich die Moleküle des Veresterungsprodukts unter Abspaltung von Wasser und/oder Alkohol miteinander verbinden. Sie wird in der Regel bei niedrigeren Temperaturen und bei niedrigerem Druck als die Nachkondensation (Stufe iii)) durchgeführt, weshalb die Vorkondensationsprodukte niedrigere Molekulargewichte verglichen mit den Nachkondensationsprodukten aufweisen.

Das Veresterungsprodukt, das in der ersten Stufe (Stufe i)) erhalten wurde, wird bis zu einer Viskositätszahl nach DIN 53728 von 20 bis 70 cm³/g vorkondensiert unter Erhalt eines Vorkondensationsprodukts.

Das Vorkondensationsprodukt weist üblicherweise eine Säurezahl gemessen nach DIN EN ISO 2114:2002-06 im Bereich von 0,7 bis 2 mg KOH/g auf.

Stufe ii) wird vorzugsweise bei einer Temperatur im Bereich von 230 bis 270 °C, bevorzugt im Bereich von 240 bis 260 °C, durchgeführt.

Zu Beginn der Stufe ii) liegt der Druck vorzugsweise im Bereich von 0,1 bis 0,5 bar, bevorzugt im Bereich von 0,2 bis 0,4 bar, zu Ende der Stufe ii) liegt der Druck vorzugsweise im Bereich von 5 bis 100 mbar, bevorzugt im Bereich von 5 bis 20 mbar.

Stufe ii) wird vorzugsweise in einem für die Vorkondensation geeigneten Reaktor durchgeführt. Beispiele für solche Reaktoren sind Rohrbündelreaktoren, Turmreaktoren, Kesselkaskaden, Blasensäulen und Fallstromkaskaden gegebenenfalls mit Entgasungseinheit.

Als besonders vorteilhaft für die Stufe ii) haben sich die in WO-A 03/042278 und WO-A 05/042615 detailliert beschriebenen Turmreaktoren erwiesen, bei denen der Produktstrom im Gleichstrom über einen ein- oder mehrstufigen Fallfilmverdampfer geführt wird, wobei die Reaktionsdämpfe, insbesondere Wasser, bei Einsatz von 1,4-Butandiol Tetrahydrofuran (THF) und bei Einsatz von Dicarbonsäureestern Alkohole, an mehreren Stellen über den Reaktor verteilt abgezogen werden.

Die Reaktionsbrüden, die vorzugsweise aus Alkohol, aus überschüssigem Diol und Nebenprodukt THF bestehen, werden üblicherweise destillativ aufgereinigt und in den Prozess zurückgefahren.

### Stufe iii)

Zu dem in der zweiten Stufe (Stufe ii)) erhaltenen Vorkondensationsprodukt wird nach Verfahrensschritt ii) und vor und/oder während Verfahrensschritt iii) 0,03 bis 0,04 Gew.-% einer Phosphorverbindung gemäß Anspruch 1 zugefügt, bezogen auf das Gesamtgewicht des Vorkondensationsproduktes.

Die Phosphorverbindung gemäß Anspruch 1 dient vorzugsweise als Deaktivator für den Katalysator.

Deaktivatoren werden vorzugsweise beim Einsatz von hochreaktiven Titankatalysatoren eingesetzt.

Vorliegend wurde jedoch auch überraschend festgestellt, dass durch Zugabe von 0,03 bis 0,04 Gew.-% einer Phosphorverbindung gemäß Anspruch 1 zusätzlich auch der Weißgrad-Index nach ASTM E 313-73 des aliphatisch-aromatischen Polyesters (Stufe iv)) erhöht wird.

Als Deaktivatoren werden phosphonige Säure oder phosphorige Säure eingesetzt.

In einer besonders bevorzugten Ausführungsform ist die Phosphorverbindung phosphorige Säure.

Gegenstand der vorliegenden Erfindung ist somit auch ein Verfahren, bei dem die Phosphorverbindung phosphorige Säure ist.

Der Titankatalysator wird in Stufe iii) durch den Zusatz einer Phosphorverbindung vorzugsweise nicht vollständig deaktiviert, d.h. er liegt in teilweise aktiver Form vor.

In Stufe iii) wird das in der zweiten Stufe (Stufe ii)) erhaltene Vorkondensationsprodukt bis zu einer Viskositätszahl nach DIN 53728 von 60 bis 170 cm³/g nachkondensiert unter Erhalt eines Nachkondensationsproduktes.

Unter "Nachkondensation" wird im Rahmen der vorliegenden Erfindung eine Kondensationsreaktion verstanden, bei der sich die Moleküle des Vorkondensationsprodukts unter Abspaltung von Wasser und/oder Alkohol miteinander verbinden unter Erhalt des Nachkondensationsprodukts. Sie wird in der Regel bei höheren Temperaturen und bei höherem Druck als die Vorkondensation (Stufe ii)) durchgeführt, weshalb die Nachkondensationsprodukte höhere Molekulargewichte verglichen mit den Vorkondensationsprodukten aufweisen.

Das Nachkondensationsprodukt weist üblicherweise eine Säurezahl gemessen nach DIN EN ISO 2114:2002-06 im Bereich von 0,8 bis 1,5 mg KOH/g, vorzugsweise im Bereich von 1,0 bis 1,4 mg KOH/g, auf.

Stufe iii) wird vorzugsweise bei einer Temperatur von 220 bis 270 °C, bevorzugt von 230 bis 250 °C und vorzugsweise bei einem Druck von 0,2 bis 5 mbar, bevorzugt von 0,5 bis 3 mbar durchgeführt.

Stufe iii) wird vorzugsweise in einem Finisher durchgeführt. Als Finisher haben sich insbesondere Reaktoren wie Ringscheibenreaktoren und Käfigreaktoren wie sie in der US 5779986 und EP 719582 beschrieben sind als geeignet erwiesen.

### Stufe iv)

In Stufe iv) wird das in der dritten Stufe (Stufe iii)) erhaltene Nachkondensationsprodukt bis zu einer Viskositätszahl nach DIN 53728 von 100 bis 300 cm³/g in einer Polyadditionsreaktion mit dem mindestens einen Kettenverlängerer (D) umgesetzt unter Erhalt des aliphatisch-aromatischen Polyesters.

Stufe iv) wird vorzugsweise bei Temperaturen von 220 bis 270 °C, bevorzugt von 230 bis 250 °C und vorzugsweise bei Überdruck oder Normaldruck durchgeführt.

Die Verweilzeiten liegen vorzugsweise im Bereich von 2 bis 30 Minuten, bevorzugt im Bereich von 4 bis 15 Minuten.

Stufe iv) wird vorzugsweise in einem Extruder, einem kontinuierlichen Kneter (List-Reaktor) oder einem statischen Mischer durchgeführt. Beispielhaft seien folgende Einbauten genannt: Beim statischen Mischer können SMR-, SMX-, SMXL-Elemente oder Kombinationen daraus, zum Beispiel von der Firma Sulzer Chemtech AG Schweiz, eingesetzt werden. Beispiele für einen List-Reaktor sind je nach Anwendungsfeld ein einwelliger DISKOTHERM B oder zweiwellige CRP-ORP-Reaktoren. Als Extruder kommen 1- oder 2-Wellen-Extruder in Frage.

### Polyesterfasern

Der erfindungsgemäße aliphatisch-aromatische Polyester kann zur Herstellung von Polyesterfasern (PF) verwendet werden.

Ein weiterer Gegenstand der vorliegenden Erfindung ist somit auch die Verwendung des aliphatisch-aromatischen Polyesters zur Herstellung von Polyesterfasern (PF).

Die Polyesterfasern (PF), die unter Verwendung des erfindungsgemäßen aliphatisch-aromatischen Polyesters hergestellt werden, enthalten, jeweils bezogen auf das Gesamtgewicht der Polyesterfasern (PF),
80 bis 99 Gew.-% mindestens eines Terephthalat-Polyesters,
1 bis 20 Gew.-% mindestens eines aliphatisch-aromatischen Polyesters gemäß Anspruch 1 bis 9, und
0 bis 5 Gew.-% mindestens eines Additivs (E),
wobei die Polyesterfasern (PF) einen Weißgrad-Index nach CIE 15.3 (2004) von mindestens 65 aufweisen.

Ein weiterer Gegenstand der vorliegenden Erfindung sind somit auch Polyesterfasern (PF), die jeweils, bezogen auf das Gesamtgewicht der Polyesterfasern (PF),
80 bis 99 Gew.-% mindestens eines Terephthalat-Polyesters,
1 bis 20 Gew.-% mindestens eines aliphatisch-aromatischen Polyesters gemäß Anspruch 1 bis 9, und
0 bis 5 Gew.-% mindestens eines Additives (E)
enthalten, dadurch gekennzeichnet, dass die Polyesterfasern (PF) einen Weißgrad-Index nach CIE 15.3 (2004) von mindestens 65 aufweisen.

Die Summe der Gewichtsprozente der in den Polyesterfasern (PF) enthaltenen Komponenten addiert sich im Allgemeinen zu 100 Gew.-%.

Der mindestens eine Terephthalat-Polyester ist dabei vorzugsweise Polyethylenterephthalat (PET) und/oder Polybutylenterephthalat (PBT).

Ein weiterer Gegenstand der vorliegenden Erfindung sind somit auch Polyesterfasern (PF), bei denen der mindestens eine Terephthalat-Polyester Polyethylenterephthalat (PET) und/oder Polybutylenterephthalat (PBT) ist.

Die Polyesterfasern (PF) enthalten vorzugsweise mindestens 80 Gew.-% des mindestens einen Terephthalat-Polyesters, bevorzugt mindestens 85 Gew.-%, bezogen auf das Gesamtgewicht der Polyesterfasern (PF).

Darüber hinaus enthalten die Polyesterfasern (PF) vorzugsweise höchstens 99 Gew.-% des mindestens einen Terephthalat-Polyesters, bevorzugt höchstens 95 Gew.-%, bezogen auf das Gesamtgewicht der Polyesterfasern (PF).

Die Polyesterfasern (PF) enthalten 80 bis 99 Gew.-% mindestens eines Terephthalat-Polyesters, bevorzugt 85 bis 95 Gew.-% mindestens eines Terephthalat-Polyesters, bezogen auf das Gesamtgewicht der Polyesterfasern (PF).

Die Polyesterfasern (PF) enthalten vorzugsweise mindestens 1 Gew.-% des erfindungsgemäßen aliphatisch-aromatischen Polyesters, bevorzugt mindestens 5 Gew.-%, bezogen auf das Gesamtgewicht der Polyesterfasern (PF).

Darüber hinaus enthalten die Polyesterfasern (PF) vorzugsweise höchstens 20 Gew.-% des erfindungsgemäßen aliphatisch-aromatischen Polyesters, bevorzugt höchstens 15 Gew.-%, mehr bevorzugt höchstens 9 Gew.-%, bezogen auf das Gesamtgewicht der Polyesterfasern (PF).

Die Polyesterfasern (PF) enthalten 1 bis 20 Gew.-% mindestens eines erfindungsgemäßen aliphatisch-aromatischen Polyesters, bevorzugt 5 bis 15 Gew.-%, mehr bevorzugt 5 bis 9 Gew.-%,bezogen auf das Gesamtgewicht der Polyesterfasern (PF).

Optional enthalten die Polyesterfasern (PF) mindestens ein Additiv (E).

Geeignete Additive sind dem Fachmann bekannt.

Beispiele für Additive sind Gleitmittel, Nukleierungsmittel, Verträglichkeitsvermittler, Flammschutzmittel, Verstärkungsmaterialien, Weichmacher, Antioxidantien, UV-Stabilisatoren und Pigmente.

Im Rahmen der vorliegenden Erfindung enthalten die Polyesterfasern (PF) vorzugsweise Gleitmittel, Nukleierungsmittel und/oder Verträglichkeitsvermittler.

Als Gleitmittel oder auch als Formtrennmittel haben sich insbesondere Kohlenwasserstoffe, Fettalkohole, höhere Carbonsäuren, Metallsalze höherer Carbonsäuren, wie Calcium- oder Zinkstearat, Fettsäureamide, wie Erucasäureamid, und Wachstypen, zum Beispiel Paraffinwachse, Bienenwachse oder Montanwachse, bewährt. Bevorzugte Gleitmittel sind Erucasäureamid und/oder Wachstypen und besonders bevorzugt Kombinationen dieser Gleitmittel. Bevorzugte Wachstypen sind Bienenwachse und Esterwachse, insbesondere Glycerinmonostearat oder Dimethylsiloxan oder Polydimethylsiloxan, wie zum Beispiel Belzil und DM^{®} der Firma Waga.

Gleitmittel werden vorzugsweise in Mengen von 0,05 bis 2 Gew.-%, bevorzugt in Mengen von 0,1 bis 1 Gew.-%, bezogen auf das Gesamtgewicht der Polyesterfasern (PF), zugegeben.

Als Nukleierungsmittel kommen in der Regel anorganische Verbindungen, wie Talkum, Kreide, Glimmer, Siliciumoxide oder Bariumsulfat in Frage.

Vorzugsweise werden 0,05 bis 5 Gew.-%, bevorzugt 0,1 bis 1 Gew.-% Nukleierungsmittel, bezogen auf das Gesamtgewicht der Polyesterfasern (PF), zugegeben.

Als Verträglichkeitsvermittler haben sich aliphatische Polyester, wie Polymilchsäure, Polycaprolacton, Polyhydroxylalkanoat oder Polyglycolsäure (PGA), als vorteilhaft erwiesen.

Die Verträglichkeitsvermittler werden vorzugsweise in Mengen von 0,1 bis 5 Gew.-%, bezogen auf das Gesamtgewicht der Polyesterfasern (PF), zugegeben.

Die folgenden Beispiele sollen die vorliegende Erfindung weiter verdeutlichen, ohne aber die vorliegende Erfindung darauf zu beschränken.

### Beispiele:

### Messmethoden

Die Bestimmung der Viskositätszahl erfolgt nach DIN 53728 (Teil 3, 3. Januar 1985). Als Lösungsmittel wurde das Gemisch Phenol/Dichlorbenzol im Gewichtsverhältnis 50/50 verwendet.

Die Bestimmung der Molekulargewichte (M_{W} und Mₙ) erfolgt nach ASTM D4001. Als Lösemittel wurde 1,1,1,3,3,3-Hexafluor-2-propanol gegen eng verteilte Polymethylmethacrylat(PMMA)-Standards verwendet.

Die Bestimmung der Schmelze-Volumenfließrate (MVR) erfolgt nach ISO 1133. Die Prüftemperatur beträgt 190 °C und die Prüflast 2,19 kg. Die Aufschmelzzeit beträgt 4 Minuten.

Die Säurezahl wird nach DIN EN ISO 2114:2002-06 bestimmt. Als Lösemittelgemisch für 1 g Polymer werden 15 mL 1,2-Dichlorbenzol verwendet, in denen der Polyester bei 180 °C gelöst und dann mit 20 mL Pyridin verdünnt wird. Nach Abkühlen auf 60 °C und Zugabe von 50 mL Tetrahydrofuran (THF), 5 mL Wasser und 40 mL Ethanol wird mit 0,1 M ethanolischer Kaliumhydroxid-Lösung potentiographisch mit Wendepunktsindikator titriert.

Die Bestimmung des Weißgrad-Indexes an den Granulaten, welche eine Korngröße von 2,5 bis 4,4 g/100 Partikel besitzen, erfolgt nach ASTM E 313-73 mittels eines Minolta Spektralphotometers CM-5. Es werden drei Messungen durchgeführt, von welchen der Mittelwert bestimmt wird. Eine Küvette aus Glas (von Minolta) wird mit dem zu messenden Granulat befüllt (mindestens 3 cm Füllhöhe). Das Granulat wird durch Aufpressen des Messkopfes des Minolta Gerätes verdichtet.

Die Messung des Weißgrad-Indexes der Polyesterfasern erfolgt an einem Datacolor DC650, gemäß ISO 18314-1. Hierzu werden die Polyesterfasern in einem deckenden Büschel über weißem und schwarzen Untergrund je 3 mal gemessen. Zwischen den Messungen wird das Muster jeweils um 90° gedreht. Aus dem Durchschnitt der 6 Messungen werden die Tristimulus values X, Y, Z entsprechend ISO 11664-1 ermittelt. Anhand dieser wird zum einen gemäß ASTM-E313 der Gelbwert ("Yellowness Index") und zum anderen gemäß CIE 15.3 der Weißgrad-Index ("Whiteness") bestimmt.

### Herstellung des aliphatisch-aromatischen Polyesters

### Erfindungsgemäßes Beispiel (E1):

Zur Herstellung des aliphatisch-aromatischen Polyesters werden 180 kg/h Adipinsäure (Komponente (A)), 200 kg/h Terephthalsäure (Komponente (B)) und 290 kg/h 1,4-Butandiol (Komponente (C)) bei 35 °C physikalisch gemischt. Anschließend wird das Gemisch kontinuierlich in einen Veresterungskessel überführt (z.B. ausgelegt als Hydrozyklon wie z.B. in WO 03/042278 A1 beschrieben).

### Stufe i)

Unter Zugabe von weiteren 140 kg/h 1,4-Butandiol (Komponente (C)) und 0,4 kg/h Tetrabutylorthotitanat (TBOT) wird das Gemisch bei einer Temperatur von 240 °C, einer Verweilzeit von 1,5 h und einem Druck von 0,85 bar kontinuierlich verestert unter Erhalt eines Veresterungsproduktes. Das entstehende Kondensationsprodukt Wasser sowie Teile des Überschusses an 1,4-Butandiol (Komponente (C)) werden abdestilliert.

### Stufe ii)

Anschließend wird das in Stufe i) erhaltene Veresterungsprodukt bei einer ansteigenden Temperatur von 250 auf 260 °C, einer Verweilzeit von 2 h und bei einem sinkenden Druck von 300 mbar auf 10 mbar über eine Fallstromkaskade (wie z.B. in WO 03/042278 A1 beschrieben) geführt und der überwiegende Teil an überschüssigem 1,4-Butandiol (Komponente (C)) abdestilliert. Dabei wird das in Stufe i) erhaltene Veresterungsprodukt unter Erhalt eines Vorkondensationsprodukts vorkondensiert.

### Stufe iii)

Nach Zugabe von 0,2 kg/h phosphoriger Säure gelöst in 1,4-Butandiol (Komponente (C)) wird das Vorkondensationsprodukt in Stufe iii) in einen Polykondensationsreaktor (wie z.B. in EP 0719582 beschrieben) überführt und bei einer Temperatur von 245 °C und bei einem Druck von 1 mbar für weitere 45 Minuten nachkondensiert unter Erhalt eines Nachkondensationsprodukts. Der verbleibende Überschuss an 1,4-Butandiol (Komponente (C)) wird abdestilliert.

### Stufe iv)

Im Anschluss an Stufe iii) werden zu dem Nachkondensationsprodukt bei 240 °C 4 kg/h Hexamethylendiisocyanat (HDI) unter Verwendung eines statischen Mischsystems zudosiert und in einer Polyadditionsreaktion der aliphatisch-aromatische Polyester erhalten. Die Verweilzeit beträgt dabei 8 Minuten. Der aliphatisch-aromatische Polyester wird unter Verwendung einer Unterwasser-Granulierung granuliert und getrocknet.

Der aliphatisch-aromatische Polyester weist eine Viskositätszahl von 185 cm³/g und Molekulargewichte M_{W} und Mₙ von 128.000 bzw. 34.000 g/mol auf. Des Weiteren weist der aliphatisch-aromatische Polyester eine Säurezahl von 1,2 mg KOH/g auf. Der Weißgrad-Index gemessen nach ASTM E 313-73 des aliphatisch-aromatischen Polyesters beträgt 33.

### Vergleichsbeispiel (V1):

Die Herstellung erfolgt analog zum Erfindungsgemäßen Beispiel (E1), außer dass die Menge an phosphoriger Säure auf 0,16 kg/h abgesenkt wird.

Der aliphatisch-aromatische Polyester weist eine Viskositätszahl von 182 cm³/g und Molekulargewichte M_{W} und Mₙ von 127.000 bzw. 33.000 g/mol auf. Des Weiteren weist der aliphatisch-aromatische Polyester eine Schmelze-Volumenfließrate von 3,8 cm³/10 min und eine Säurezahl von 0,8 mg KOH/g auf. Der Weißgrad-Index gemessen nach ASTM E 313-73 des aliphatisch-aromatischen Polyesters beträgt 18.

**Tabelle 1: Weißgrad-Index nach ASTM E313-73 (höhere Werte = weißer/besser)**

| Beispiel | Weißgrad-Index ASTM E313-73 |
|---|---|
| E1 | 33 |
| V1 | 18 |

Durch den höheren Zusatz an phosphoriger Säure bei der Herstellung des erfindungsgemäßen Polyesters E1 weist dieser somit einen höheren Weißgrad-Index auf als der Polyester aus dem Vergleichsbeispiel V1.

### Herstellung der Polyesterfasern

Als Terephthalat-Polyester wurde in allen Faserversuchen ein Polyethylenterephthalat (PET) der Firma Invista vom Typ "RT 20" verwendet welches in den Beispielen mit der Bezeichnung "PET RT 20" abgekürzt ist.

### Erfindungsgemäßes Beispiel (E2):

Vor dem Spinnen wird der aliphatisch-aromatische Polyester gemäß E1 für 8 Stunden bei einer Temperatur von 80 °C getrocknet. Das PET RT 20 wird vor dem Spinnen 8 Stunden bei 120 °C vorkristallisiert und über Nacht bei 160 °C getrocknet.

PET RT 20 wird mit einem erfindungsgemäßen aliphatisch-aromatischen Polyester, der durch Kondensation von Adipinsäure (Komponente (A)), Terephthalsäure (Komponente (B)) und 1,4-Butandiol (Komponente (C)) gemäß Beispiel E1 erhalten wurde, gemischt und in einem Extruder unter Erhalt einer homogenen Schmelze aufgeschmolzen. Die homogene Schmelze wird anschließend durch eine 24-Lochdüse mit einem Normalsieb (300 µm) des Extruders extrudiert, wobei Polyesterfasern (PF) erhalten werden.

Die Menge des eingesetzten Polyethylenterephthalat (PET) beträgt 94 Gew.-%, die Menge des eingesetzten aliphatisch-aromatischen Polyesters beträgt 6 Gew.-%, bezogen auf das Gesamtgewicht des PET RT 20 und des aliphatisch-aromatischen Polyesters. Die Spinntemperatur beträgt 280 °C.

Die an der erhaltenen Faser E2 ermittelten Farbewerte sind in Tabelle 2 zusammengefasst.

### Vergleichsbeispiel (V2):

Vor dem Spinnen wird der aliphatisch-aromatische Polyester gemäß V1 für 8 Stunden bei einer Temperatur von 80 °C getrocknet. Das PET RT 20 wird vor dem Spinnen 8 Stunden bei 120 °C vorkristallisiert und über Nacht bei 160 °C getrocknet.

PET RT 20 wird mit dem aliphatisch-aromatischen Polyester V1, der durch Kondensation von Adipinsäure (Komponente (A)), Terephthalsäure (Komponente (B)) und 1,4-Butandiol (Komponente (C)) gemäß Vergleichsbeispiel V1 erhalten wurde, gemischt und in einem Extruder unter Erhalt einer homogenen Schmelze aufgeschmolzen. Die homogene Schmelze wird anschließend durch eine 24-Lochdüse mit einem Normalsieb (300 µm) des Extruders extrudiert, wobei Polyesterfasern (PF) erhalten werden.

Die Menge des eingesetzten Polyethylenterephthalat (PET) beträgt 94 Gew.-%, die Menge des eingesetzten aliphatisch-aromatischen Polyesters beträgt 6 Gew.-%, bezogen auf das Gesamtgewicht des Polyethylenterephthalats (PET) und des aliphatisch-aromatischen Polyesters. Die Spinntemperatur beträgt 280 °C.

Die an der erhaltenen Faser V2 ermittelten Farbwerte sind in Tabelle 2 zusammengefasst.

### Vergleichsbeispiel (V3):

Es wurden Fasern ohne Zusatz eines aliphatisch-aromatischen Polyesters auf Basis von PET RT 20 hergestellt.

Vor dem Spinnen wurde das PET RT 20 für 8 Stunden bei 120 °C vorkristallisiert und über Nacht bei 160 °C getrocknet.

PET RT 20 wurde in einem Extruder unter Erhalt einer homogenen Schmelze aufgeschmolzen. Die homogene Schmelze wurde anschließend durch eine 24-Lochdüse mit einem Normalsieb (300 µm) des Extruders extrudiert, wobei die Polyesterfasern (PF) erhalten werden. Die Spinntemperatur beträgt 290 °C.

**Tabelle 2: Weißgrad-Index und Gelbwert der Polyesterfasern aus den Beispielen E2 sowie V2 und V3.**

| Beispiel | Weißgrad-Index gemäß CIE 15.3 (2004) | Gelbwert gemäß ASTM E 313 |
|---|---|---|
| E2 | 74,2 | 3,8 |
| V2 | 60,7 | 8,5 |
| V3 | 81,6 | 2,1 |

Die Polyesterfasern (E2), die mit dem erfindungsgemäßen aliphatisch-aromatischen Polyester (E1) hergestellt werden, weisen gegenüber der reinen Polyesterfaser aus V3 nur eine geringfügige Verschlechterung des Weißgrad-Indexes sowie des Gelbwertes auf. Demgegenüber sind die mit dem aliphatisch-aromatischen Polyester (V1) hergestellten Polyesterfasern (V2) deutlich stärker verfärbt, was an dem stark gestiegenen Gelbwert und dem geringeren Weißgrad-Index ablesbar ist. Auch visuell resultiert bei der Faser V2 eine deutlich wahrnehmbare Gelbfärbung, die für eine technische Anwendung nicht akzeptabel ist. Gegenüber den reinen PET-Fasern V3 weisen die erfindungsgemäßen Polyesterfasern E2 nur eine geringfügige Verschlechterung des Weißgrad-Indexes auf.

## Patentansprüche

1. Aliphatisch-aromatischer Polyester erhältlich durch Kondensation mindestens der Komponenten (A), (B), (C) sowie (D):
(A) 40 bis 70 mol-%, bezogen auf die Komponenten (A) und (B), Adipinsäure und/oder mindestens eines Adipinsäure-Derivats,
(B) 30 bis 60 mol-%, bezogen auf die Komponenten (A) und (B), mindestens einer aromatischen 1,ω-Dicarbonsäure und/oder mindestens eines 1,ω-Dicarbonsäure-Derivats,
(C) 98 bis 102 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers,
**dadurch gekennzeichnet, dass** der aliphatisch-aromatische Polyester einen Weißgrad-Index nach ASTM E 313-73 von mindestens 25 aufweist, und die Kondensation die vier Stufen i) bis iv) umfasst:
i) eine kontinuierliche Veresterung einer Mischung, die die Komponenten (A), (B) und (C) enthält, in Gegenwart eines Katalysators unter Erhalt eines Veresterungsproduktes,
ii) eine Vorkondensation,
iii) eine Nachkondensation und
iv) eine Polyadditionsreaktion,
wobei zu dem in der zweiten Stufe erhaltenen Vorkondensationsprodukt nach Verfahrensschritt ii) und vor und/oder während Verfahrensschritt iii) 0,03 bis 0,04 Gew.-% einer Phosphorverbindung zugefügt wird, bezogen auf das Gesamtgewicht des Vorkondensationsproduktes,
wobei es sich bei der Phosphorverbindung um phosphonige Säure oder phosphorige Säure handelt.

2. Aliphatisch-aromatischer Polyester gemäß Anspruch 1, **dadurch gekennzeichnet, dass** der aliphatisch-aromatische Polyester einen Weißgrad-Index nach ASTM E 313-73 von 25 bis 40 aufweist.

3. Aliphatisch-aromatischer Polyester gemäß Anspruch 1 oder 2, **dadurch gekennzeichnet, dass** der aliphatisch-aromatische Polyester eine Säurezahl gemessen nach DIN EN ISO 2114:2002-06 im Bereich von 1,1 bis 1,4 mg KOH/g aufweist.

4. Aliphatisch-aromatischer Polyester gemäß einem der Ansprüche 1 bis 3, **dadurch gekennzeichnet, dass** der aliphatisch-aromatische Polyester eine Viskositätszahl nach DIN 53728 im Bereich von 100 bis 300 cm³/g aufweist.

5. Aliphatisch-aromatischer Polyester gemäß einem der Ansprüche 1 bis 4, **dadurch gekennzeichnet, dass** der aliphatisch-aromatische Polyester erhältlich ist durch Kondensation mindestens der Komponenten (A), (B), (C) sowie (D):
(A) 45 bis 65 mol-%, bezogen auf die Komponenten (A) und (B), Adipinsäure und/oder mindestens eines Adipinsäure-Derivats,
(B) 35 bis 55 mol-%, bezogen auf die Komponenten (A) und (B), mindestens einer aromatischen 1,ω-Dicarbonsäure und/oder mindestens eines 1,ω-Dicarbonsäure-Derivats,
(C) 99 bis 101 mol-%, bezogen auf die Komponenten (A) und (B), mindestens eines aliphatischen 1,ω-Diols, und
(D) 0,01 bis 5 Gew.-%, bezogen auf das Gesamtgewicht der Komponenten (A) bis (C), mindestens eines Kettenverlängerers.

6. Aliphatisch-aromatischer Polyester gemäß einem der Ansprüche 1 bis 5, **dadurch gekennzeichnet, dass** die Komponente (B) Terephthalsäure und/oder ein Terephthalsäure-Derivat ist.

7. Aliphatisch-aromatischer Polyester gemäß einem der Ansprüche 1 bis 6, **dadurch gekennzeichnet, dass** die Komponente (C) 1,3-Propandiol und/oder 1,4-Butandiol ist.

8. Aliphatisch-aromatischer Polyester gemäß einem der Ansprüche 1 bis 7, **dadurch gekennzeichnet, dass** die Komponente (D) Hexamethylendiisocyanat ist.

9. Aliphatisch-aromatischer Polyester gemäß einem der Ansprüche 1 bis 8, **dadurch gekennzeichnet, dass** die Glasübergangstemperatur (T_{G}) des aliphatisch-aromatischen Polyesters im Bereich von -50 bis 0 °C liegt.

10. Verfahren zur Herstellung eines aliphatisch-aromatischen Polyesters gemäß einem der Ansprüche 1 bis 9, **dadurch gekennzeichnet, dass**
i) in einer ersten Stufe eine Mischung, die die Komponenten (A), (B) und (C) enthält, in Gegenwart eines Katalysators kontinuierlich verestert wird unter Erhalt eines Veresterungsproduktes,
ii) in einer zweiten Stufe kontinuierlich das in der ersten Stufe erhaltene Veresterungsprodukt bis zu einer Viskositätszahl nach DIN 53728 von 20 bis 70 cm³/g vorkondensiert wird unter Erhalt eines Vorkondensationsproduktes,
iii) in einer dritten Stufe kontinuierlich das in der zweiten Stufe erhaltene Vorkondensationsprodukt bis zu einer Viskositätszahl nach DIN 53728 von 60 bis 170 cm³/g nachkondensiert wird unter Erhalt eines Nachkondensationsproduktes, und
v) in einer vierten Stufe kontinuierlich das in der dritten Stufe erhaltene Nachkondensationsprodukt bis zu einer Viskositätszahl nach DIN 53728 von 100 bis 300 cm³/g in einer Polyadditionsreaktion mit dem mindestens einem Kettenverlängerer (D) umgesetzt wird unter Erhalt des aliphatisch-aromatischen Polyesters,
wobei zu dem in der zweiten Stufe erhaltenen Vorkondensationsprodukt nach Verfahrensschritt ii) und vor und/oder während Verfahrensschritt iii) 0,03 bis 0,04 Gew.-% einer Phosphorverbindung zugefügt wird, bezogen auf das Gesamtgewicht des Vorkondensationsproduktes,
wobei es sich bei der Phosphorverbindung um phosphonige Säure oder phosphorige Säure handelt.

11. Verfahren gemäß Anspruch 10, **dadurch gekennzeichnet, dass** die Stufen i) und ii) in Gegenwart eines Titankatalysators durchgeführt werden.

12. Verfahren gemäß Anspruch 10, **dadurch gekennzeichnet, dass** die Phosphorverbindung phosphorige Säure ist.

13. Verwendung des aliphatisch-aromatischen Polyesters gemäß einem der Ansprüche 1 bis 9 zur Herstellung von Polyesterfasern (PF).

14. Polyesterfasern (PF), die jeweils, bezogen auf das Gesamtgewicht der Polyesterfasern (PF),
80 bis 99 Gew.-% mindestens eines Terephthalat-Polyesters,
1 bis 20 Gew.-% mindestens eines aliphatisch-aromatischen Polyesters gemäß Anspruch 1 bis 9, und
0 bis 5 Gew.-% mindestens eines Additives (E)
enthalten, **dadurch gekennzeichnet, dass** die Polyesterfasern (PF) einen Weißgrad-Index nach CIE 15.3 von mindestens 65 aufweisen.

15. Polyesterfasern (PF) gemäß Anspruch 14, **dadurch gekennzeichnet, dass** der mindestens eine Terephthalat-Polyester Polyethylenterephthalat (PET) und/oder Polybutylenterephthalat (PBT) ist.

16. Aliphatisch-aromatischer Polyester erhältlich nach einem Verfahren gemäß einem der Ansprüche 10 bis 12.

## Claims

1. An aliphatic-aromatic polyester obtainable by condensation at least of components (A), (B), (C) and (D) :
(A) 40 to 70 mol%, based on components (A) and (B), of adipic acid and/or at least one adipic acid derivative,
(B) 30 to 60 mol%, based on components (A) and (B), of at least one aromatic 1,ω-dicarboxylic acid and/or at least one 1,w-dicarboxylic acid derivative,
(C) 98 to 102 mol%, based on components (A) and (B), of at least one aliphatic 1,w-diol, and
(D) 0.01% to 5% by weight, based on the total weight of components (A) to (C), of at least one chain extender, wherein the aliphatic-aromatic polyester has a whiteness index according to ASTM E 313-73 of at least 25, and the condensation comprises the four stages i) to iv):
i) a continuous esterification of a mixture comprising components (A), (B) and (C) in the presence of a catalyst to obtain an esterification product,
ii) a precondensation,
iii) a postcondensation and
iv) a polyaddition reaction,
where 0.03% to 0.04% by weight of a phosphorus compound is added to the precondensation product obtained in the second stage after process step ii) and before and/or during process step iii), based on the total weight of the precondensation product,
wherein the phosphorus compound is a phosphonic or phosphorous acid.

2. The aliphatic-aromatic polyester according to claim 1, wherein the aliphatic-aromatic polyester has a whiteness index according to ASTM E 313-73 of 25 to 40.

3. The aliphatic-aromatic polyester according to claim 1 or 2, wherein the aliphatic-aromatic polyester has an acid number measured according to DIN EN ISO 2114:2002-06 in the range from 1.1 to 1.4 mg KOH/g.

4. The aliphatic-aromatic polyester according to any of claims 1 to 3, wherein the aliphatic-aromatic polyester has a viscosity number according to DIN 53728 in the range from 100 to 300 cm³/g.

5. The aliphatic-aromatic polyester according to any of claims 1 to 4, wherein the aliphatic-aromatic polyester is obtainable by condensation at least of components (A), (B), (C) and (D):
(A) 45 to 65 mol%, based on components (A) and (B), of adipic acid and/or at least one adipic acid derivative,
(B) 35 to 55 mol%, based on components (A) and (B), of at least one aromatic 1,ω-dicarboxylic acid and/or at least one 1,w-dicarboxylic acid derivative,
(C) 99 to 101 mol%, based on components (A) and (B), of at least one aliphatic 1,w-diol, and
(D) 0.01% to 5% by weight, based on the total weight of components (A) to (C), of at least one chain extender.

6. The aliphatic-aromatic polyester according to any of claims 1 to 5, wherein component (B) is terephthalic acid and/or a terephthalic acid derivative.

7. The aliphatic-aromatic polyester according to any of claims 1 to 6, wherein component (C) is propane-1,3-diol and/or butane-1,4-diol.

8. The aliphatic-aromatic polyester according to any of claims 1 to 7, wherein component (D) is hexamethylene diisocyanate.

9. The aliphatic-aromatic polyester according to any of claims 1 to 8, wherein the glass transition temperature (T_{G}) of the aliphatic-aromatic polyester is in the range from -50 to 0°C.

10. A process for preparing an aliphatic-aromatic polyester according to any of claims 1 to 9, wherein
i) in a first stage a mixture comprising components (A), (B) and (C) is continuously esterified in the presence of a catalyst to obtain an esterification product,
ii) in a second stage the esterification product obtained in the first stage is continuously precondensed up to a viscosity number according to DIN 53728 of 20 to 70 cm³/g to obtain a precondensation product,
iii) in a third stage the precondensation product obtained in the second stage is continuously postcondensed up to a viscosity number according to DIN 53728 of 60 to 170 cm³/g to obtain a postcondensation product, and
iv) in a fourth stage the postcondensation product obtained in the third stage is continuously reacted in a polyaddition reaction with the at least one chain extender (D) up to a viscosity number according to DIN 53728 of 100 to 300 cm³/g to obtain the aliphatic-aromatic polyester,
where 0.03% to 0.04% by weight of a phosphorus compound is added to the precondensation product obtained in the second stage after process step ii) and before and/or during process step iii), based on the total weight of the precondensation product,
wherein the phosphorus compound is a phosphonic or phosphorous acid.

11. The process according to claim 10, wherein stages i) and ii) are conducted in the presence of a titanium catalyst.

12. The process according to claim 10, wherein the phosphorus compound is phosphorous acid.

13. The use of the aliphatic-aromatic polyester according to any of claims 1 to 9 for production of polyester fibers (PF).

14. Polyester fibers (PF) each comprising, based on the total weight of the polyester fibers (PF),
80% to 99% by weight of at least one terephthalate polyester,
1% to 20% by weight of at least one aliphatic-aromatic polyester according to claim 1 to 9, and
0% to 5% by weight of at least one additive (E),
wherein the polyester fibers (PF) have a whiteness index according to CIE 15.3 of at least 65.

15. Polyester fibers (PF) according to claim 14, wherein the at least one terephthalate polyester is polyethylene terephthalate (PET) and/or polybutylene terephthalate (PET) .

16. An aliphatic-aromatic polyester obtainable by a process according to any of claims 10 to 12.

## Revendications

1. Polyester aliphatique-aromatique qui peut être obtenu par la condensation au moins des composants (A), (B), (C) et (D) :
(A) 40 à 70 % en moles, par rapport aux composants (A) et (B), d'acide adipique et/ou d'au moins un dérivé d'acide adipique,
(B) 30 à 60 % en moles, par rapport aux composants (A) et (B), d'au moins un acide 1,ω-dicarboxylique aromatique et/ou d'au moins un dérivé d'un acide 1,ω-dicarboxylique,
(C) 98 à 102 % en moles, par rapport aux composants (A) et (B), d'au moins un 1,ω-diol aliphatique, et
(D) 0,01 à 5 % en moles, par rapport au poids total des composants (A) à (C), d'au moins un extenseur de chaînes, **caractérisé en ce que** le polyester aliphatique-aromatique présente un indice de blancheur selon la norme ASTM E 313-73 d'au moins 25, et la condensation comprenant les quatre étapes i) à iv) :
i) une estérification en continu d'un mélange contenant les composants (A), (B) et (C) en présence d'un catalyseur avec obtention d'un produit d'estérification,
ii) une pré-condensation,
iii) une post-condensation et
iv) une réaction de polyaddition,
0,03 à 0,04 % en poids d'un composé du phosphore étant ajouté au produit de pré-condensation obtenu dans la deuxième étape après l'étape de procédé ii) et avant et/ou pendant l'étape de procédé iii), par rapport au poids total du produit de pré-condensation,
dans laquelle le composé phosphoreux est un acide phosphonique ou phosphoreux.

2. Polyester aliphatique-aromatique selon la revendication 1, **caractérisé en ce que** le polyester aliphatique-aromatique présente un indice de blancheur selon la norme ASTM E 313-73 de 25 à 40.

3. Polyester aliphatique-aromatique selon la revendication 1 ou 2, **caractérisé en ce que** le polyester aliphatique-aromatique présente un indice d'acide mesuré selon la norme DIN EN ISO 2114:2002-06 dans la plage de 1,1 à 1,4 mg de KOH/g.

4. Polyester aliphatique-aromatique selon l'une quelconque des revendications 1 à 3, **caractérisé en ce que** le polyester aliphatique-aromatique présente un indice de viscosité selon la norme DIN 53728 dans la plage de 100 à 300 cm³/g.

5. Polyester aliphatique-aromatique selon l'une quelconque des revendications 1 à 4, **caractérisé en ce que** le polyester aliphatique-aromatique peut être obtenu par condensation au moins des composants (A), (B), (C) et (D) :
(A) 45 à 65 % en moles, par rapport aux composants (A) et (B), d'acide adipique et/ou d'au moins un dérivé d'acide adipique,
(B) 35 à 55 % en moles, par rapport aux composants (A) et (B), d'au moins un acide 1,ω-dicarboxylique aromatique et/ou d'au moins un dérivé d'un acide 1,ω-dicarboxylique,
(C) 99 à 101 % en moles, par rapport aux composants (A) et (B), d'au moins un 1,ω-diol aliphatique, et
(D) 0,01 à 5 % en moles, par rapport au poids total des composants (A) à (C), d'au moins un extenseur de chaînes.

6. Polyester aliphatique-aromatique selon l'une quelconque des revendications 1 à 5, **caractérisé en ce que** le composant (B) est l'acide téréphtalique et/ou un dérivé d'acide téréphtalique.

7. Polyester aliphatique-aromatique selon l'une quelconque des revendications 1 à 6, **caractérisé en ce que** le composant (C) est le 1,3-propanediol et/ou le 1,4-butanediol.

8. Polyester aliphatique-aromatique selon l'une quelconque des revendications 1 à 7, **caractérisé en ce que** le composant (D) est le diisocyanate d'hexamethylène.

9. Polyester aliphatique-aromatique selon l'une quelconque des revendications 1 à 8, **caractérisé en ce que** la température de transition vitreuse (T_{G}) du polyester aliphatique-aromatique se situe dans la plage de -50 à 0 °C.

10. Procédé pour la préparation d'un polyester aliphatique-aromatique selon l'une quelconque des revendications 1 à 9, **caractérisé en ce que**
i) dans une première étape, un mélange, qui contient les composants (A), (B) et (C), est estérifié de manière continue en présence d'un catalyseur avec obtention d'un produit d'estérification,
ii) dans une deuxième étape, le produit d'estérification obtenu dans la première étape est pré-condensé de manière continue jusqu'à un indice de viscosité selon la norme DIN 53728 de 20 à 70 cm³/g avec obtention d'un produit de pré-condensation,
iii) dans une troisième étape, le produit de pré-condensation obtenu dans la deuxième étape est post-condensé de manière continue jusqu'à un indice de viscosité selon la norme DIN 53728 de 60 à 170 cm³/g avec obtention d'un produit de post-condensation, et
iv) dans une quatrième étape, le produit de post-condensation obtenu dans la troisième étape est transformé de manière continue dans une réaction de polyaddition avec l'au moins un extenseur de chaînes (D) jusqu'à un indice de viscosité selon la norme DIN 53728 de 100 à 300 cm³/g avec obtention d'un polyester aliphatique-aromatique,
0,03 à 0,04 % en poids d'un composé du phosphore étant ajouté au produit de pré-condensation obtenu dans la deuxième étape après l'étape de procédé ii) et avant et/ou pendant l'étape de procédé iii), par rapport au poids total du produit de pré-condensation,
dans laquelle le composé phosphoreux est un acide phosphonique ou phosphoreux.

11. Procédé selon la revendication 10, **caractérisé en ce que** les étapes i) et ii) sont mises en œuvre en présence d'un catalyseur de titane.

12. Procédé selon la revendication 10, **caractérisé en ce que** le composé du phosphore est l'acide phosphoreux.

13. Utilisation du polyester aliphatique-aromatique selon l'une quelconque des revendications 1 à 9 pour la préparation de fibres de polyester (FP).

14. Fibres de polyester (FP), qui contiennent à chaque fois, par rapport au poids total des fibres de polyester (FP),
80 à 99 % en poids d'au moins un polyester de téréphtalate,
1 à 20 % en poids d'au moins un polyester aliphatique-aromatique selon les revendications 1 à 9, et
0 à 5 % en poids d'au moins un additif (E),
**caractérisées en ce que** les fibres de polyester (FP) présentent un indice de blancheur selon CIE 15.3 d'au moins 65.

15. Fibres de polyester (FP) selon la revendication 14, **caractérisées en ce que** l'au moins un polyester de téréphtalate est un poly(téréphtalate d'éthylène) (PET) et/ou un poly(téréphtalate de butylène) (PBT).

16. Polyester aliphatique-aromatique qui peut être obtenu par un procédé selon l'une quelconque des revendications 10 à 12.
